Europäisches Patentamt

**European Patent Office**

Office européen des brevets

(19)

(11) Veröffentlichungsnummer: **0 274 630**
**B1**

(12) **EUROPÄISCHE PATENTSCHRIFT**

(45) Veröffentlichungstag der Patentschrift: **23.01.91**

(21) Anmeldenummer: **87117450.4**

(22) Anmeldetag: **26.11.87**

(51) Int. Cl.⁵: **F 23 D 14/02, F 23 D 14/26, F 23 D 11/00**

(54) **Brenneranordnung.**

(30) Priorität: **11.12.86 CH 4928/86**

(43) Veröffentlichungstag der Anmeldung:
**20.07.88 Patentblatt 88/29**

(45) Bekanntmachung des Hinweises auf die
Patenterteilung:
**23.01.91 Patentblatt 91/04**

(84) Benannte Vertragsstaaten:
**CH DE FR GB IT LI NL**

(56) Entgegenhaltungen:
**EP-A-0 095 788**
**EP-A-0 108 361**
**EP-A-0 193 838**
**DE-A-3 606 625**
**GB-A-1 031 184**

(73) Patentinhaber: **BBC Brown Boveri
Aktiengesellschaft
CH-5401 Baden (CH)**

(72) Erfinder: **Füglistaller, Cornel
Winkel 287
CH-8916 Jonen (CH)**
Erfinder: **Keller, Jakob, Dr.
Plattenstrasse 8
CH-5605 Dottikon (CH)**
Erfinder: **Sattelmayer, Thomas, Dr.
Hauptstrasse 108
CH-5318 Mandach (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

### Technisches Gebiet

Die vorliegende Erfindung betrifft eine Brenneranordnung, welche vornehmlich für eine Gasturbine vorgesehen ist. Sie betrifft insbesondere eine Brenneranordnung mit einem in eine Brennkammer mündenden Hauptzuführungskanal für ein Brennstoff-Luftgemisch mit einem Drallkörper und einer den Drallkörper durchsetzenden Brennerlanze. Eine solche Brenneranordnung wird auch als Vormischbrenner bezeichnet.

### Stand der Technik

In Gasturbinen werden heute praktisch ausschliesslich Diffusionsbrenner verwendet. Im Zuge der Bemühungen zur Reduktion der Schadstoffemissionen wurde bereits der Einsatz von Vormischbrennern erwogen. Im Unterschied zu Diffusionsbrennern wird bei Vormischbrennern der Flamme in der Brennkammer ein Verbrennungsgemisch mit einer einheitlichen Luftzahl angeboten. Die Luftzahl λ ist proportional zum Quotienten aus der Verbrennungsluftmenge und der Brennstoffmenge im Verbrennungsgemisch. Sie ist so normiert, dass λ=1 einem stöchiometrischen Gemisch entspricht. Ueber die Einstellung der Luftzahl lässt sich die Temperatur der Flamme, von der die Schadstoffbildung wesentlich abhängt, kontrollieren. Mit Vormischbrennern lassen sich insbesondere niedrige Nox-Werte erreichen.

Ein Problem der Vormischbrenner ist jedoch deren geringe Regelbarkeit. Bei einer Luftzahl von etwa λ>2,4 des Verbrennungsgemisches erlischt die Flamme. Für den Einsatz in Gasturbinen ist der Regelungsbereich von Vormischbrennern zu klein. Gasturbinen für die Stromerzeugung müssen von Vollast bis hin zum Leerlauf gefahren werden können. Konzepte zur Lösung des Regelungsproblems sehen oft Brennkammer mit einer Mehrzahl von Vormischbrennern vor, welche stufenweise zu- bzw. abgeschaltet werden könne. Im Rahmen dieser Konzepte einsetzbare Vormischbrenner müssen einerseits eine ausreichende Flammenstabilität gewährleisten und andererseits sicherstellen, dass in jedem Betriebszustand eine sofortige Zündung der Flamme vom Nachbarbrenner aus stattfindet.

Aus GB—A—1 031 184 ist eine Brennkammeranordnung für eine Gasturbine mit einem in eine Brennkammer mündenden Hauptzuführungskanal für ein Brennstoff/Luft-Gemisch mit einem abströmungsseitig plazierten Drallkörper und einer den Drallkörper durchsetzenden Brennerlanze bekannt. Mit dieser Ausbildung ist es indessen mit der dort erzielten Wirbelbildung nicht möglich, eine Querzündungskapazität der Flamme zu erzielen. Des weiteren lässt sich mit dem Gegenstand keine Selbststabilisierung der Flamme erreichen, welche beispielsweise notwendig ist, wenn mit einem hohen Luftüberschuss im Verbrennungsgemisch gefahren wird.

### Darstellung der Erfindung

Es ist Aufgabe der vorliegenden Erfindung, eine Brenneranordnung der eingangs genannten Art anzugeben, die im Gegensatz zu bekannten Brenneranordnungen eine so hohe Flammenstabilität besitzt, dass der ganze Regelbereich in Gasturbinen ohne Brennerabschaltung durchfahren werden kann und die darüber hinaus eine gute Querzündfähigkeit besitzt.

Die genannte sowie weitere Aufgaben werden gemäss der vorliegenden Erfindung gelöst durch die Angabe einer Brenneranordnung mit den Merkmalen des Anspruches 1. Erfindungsgemäss weist also bei einer Brenneranordnung der eingangs genannten Art die Brennerlanze bezüglich des Drallkörpers brennkammerseitig Austrittsöffnungen für in ihrem Innern zugeführten Brennstoff oder für ein in ihrem Innern zugeführtes oder gebildetes brennstoffreiches Brennstoff-Luftgemisch auf.

Neben den mit der Erfindung erreichten guten Querzündungseigenschaften wird die Flamme durch die Erfindung zusätzlich stabilisiert. Als Folge dieses Stabilisierungseffektes kann der stabile Betriebsbereich der Brenneranordnung auf bisher nicht erreichbare Betriebsbereiche mit hohem Luftüberschuss im Verbrennungsgemisch erweitert werden.

Vorteilhafte Ausgestaltungen der Erfindung sind in den abhängigen Ansprüchen gekennzeichnet.

### Kurze Beschreibung der Zeichnung

Weitere Merkmale und Vorteile der vorliegenden Erfindung ergeben sich aus der nachstehenden, ausführlichen Beschreibung, insbesondere unter Berücksichtigung der beigefügten Zeichnungen.

Es zeigen

Fig. 1 eine geschnittene Darstellung einer Brenneranordnung mit einer gemäss der Erfindung ausgebildeten Brennerlanze und

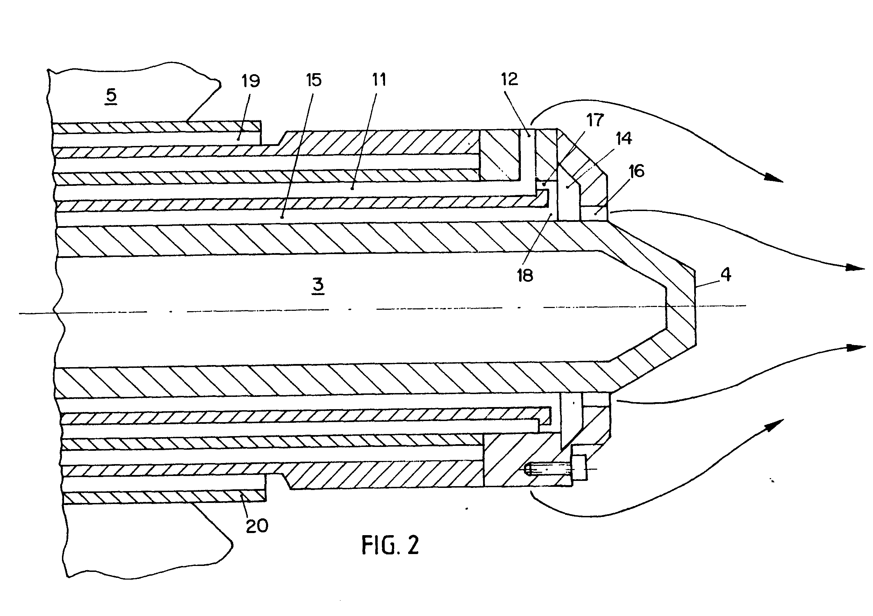

Fig. 2 einen Ausschnitt von Fig. 1 mit dem Kopf der Brennerlanze in gegenüber Fig. 1 vergrösserter Darstellung.

### Bester Weg zur Ausführung der Erfindung

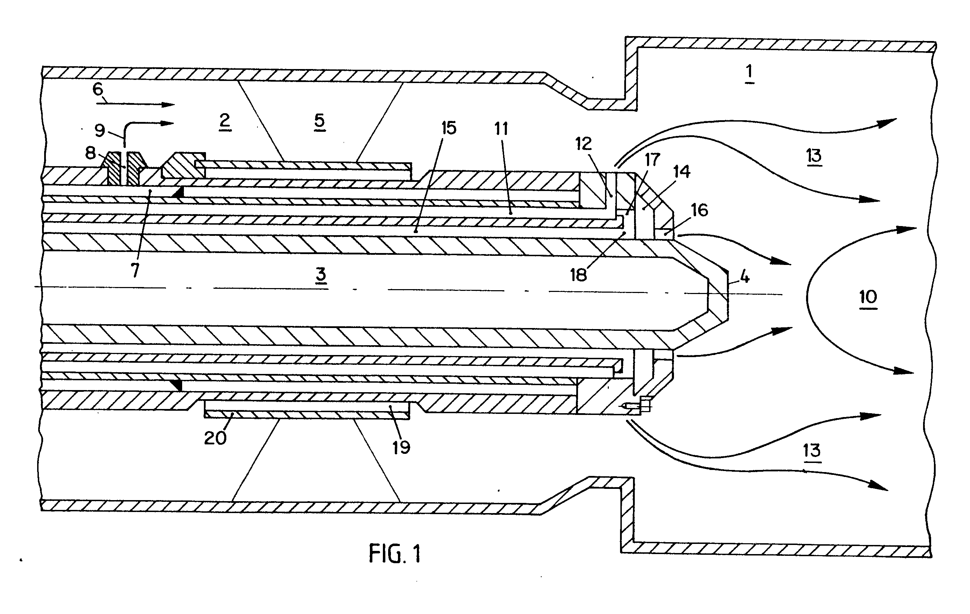

Es wird nunmehr auf die Zeichnungen Bezug genommen. In Fig. 1 ist eine mit 1 bezeichnete Brennkammer abschnittsweise dargestellt, in die ein mit 2 bezeichneter, ebenfalls nur abschnittsweise dargestellter Hauptzuführungskanal für ein Brennstoff-Luftgemisch mündet.

Im Hauptzuführungskanal ist eine Brennerlanze 3 angeordnet, deren Kopf 4 sich in der Nähe des Eintritts der Brennkammer 1 befindet. Auch die Brennerlanze 3 ist nicht in ihrer vollen Länge dargestellt. Die Brennerlanze 3 durchsetzt in Strömungsrichtung vor ihrem Kopf bzw. Kopfteil 4 einen ebenfalls im Hauptführungskanal angeordneten Drallkörper 5.

Das Brennstoff-Luftgemisch wird im Hauptzuführungskanal 2 in Strömungsrichtung vor dem Drallkörper 5 gebildet. Die Verbrennungsluft tritt vom linken Rand der Fig. 1 in den Raum vor dem Drallkörper 5 ein (Pfeil 6). Der Brennstoff wird über einen Zuführungskanal 7 in der Brennerlanze 3 zugeführt und über Düsen 8 in den genannten Raum eingedüst, wo er sich mit der Verbrennungsluft vermischt (Pfeil 9). Die dargestellte Brenneranordnung ist insofern, abgesehen von ihrer nachstehend erläuterten speziellen Ausbildung, ein Vormischbrenner. Bedingt durch die Geometrie der Brenneranordnung bildet sich während ihres Betriebs im Brennraum 1 frei im Raum eine dynamisch stabilisierte Wirbelrückstromzone 10 (Vortex Breakdown) aus.

Wie bereits erläutert, lässt sich ein Vormischbrenner nur in sehr engen Grenzen regeln. Um den Regelungsbereich der Brenneranordnung zu erweitern und insbesondere um ein vollständiges Erlöschen der Flamme im Brennraum 1 bei Leerlauf der Brenneranordnung zu vermeiden, ist die Brennerlanze 3 wie folge ausgebildet: Sie ist bezüglich des Drallkörpers 5 brennkammerseitig mit (im Hinblick auf die Düsen 8 weiteren) Austrittsöffnungen versehen, für in ihrem Innern zugeführten Brennstoff oder für ein in ihrem Innern zugeführtes oder gebildetes brennstoffreicheres Brennstoff-Luftgemisch. "Brennstoffreicher" bezieht sich dabei auf das Verbrennungsgemisch, das jeweils im Hauptzuführungskanal 2 im Raum vor dem Drallkörper 5 gebildet wird.

Durch die erfindungsgemässe Ausbildung der Brennerlanze 3 wird an ihrem Kopf 4 ein Stützbrenner bzw. ein Haltebrenner realisiert.

Der Stützbrenner ist vorzugsweise als Diffusionsbrenner und der Haltebrenner als Vormischbrenner ausgebildet. Vorzugsweise findet eine Kombination beider Konzepte Verwendung, die sich hinsichtlich ihrer Wirkung in nachstehend noch erläuterter Weise vorteilhaft ergänzen.

Die in den Figuren dargestellte Brennerlanze 3 ist so ausgebildet, dass sich sowohl ein Stützbrenner als auch ein Haltebrenner ergibt.

Zur Ausbildung des Stützbrenners ist in der Brennerlanze 3 ein (im Hinblick auf den Zuführungskanal 7 weiterer) Brennstoffkanal 11 vorgesehen, welcher am Kopf 4 der Brennerlanze 3 nach aussen führende Austrittsöffnungen 12 aufweist.

Zur Ausbildung des Haltebrenners ist im Kopf 4 der Brennerlanze eine Vormischkammer 14 vorgesehen, in die ein Kanal für Verbrennungsluft 15 sowie der bereits genannte Brennstoffkanal 11 münden und welche zur Brennkammer 1 hin axial ausgerichtete Aushilfsöffnungen 16 aufweist. Die Vormischkammer 14 ist als Ringkammer ausgebildet. Die Austrittsöffnungen 16 können gleichmässig über ihren Umfang verteilt sein oder aus einem Ringspalt bestehen.

Die Austrittsöffnungen 12 des Brennstoffkanals 11 sind relativ zu seiner Mündungsöffnung 17 in die Vormischkammer 14 so bemessen, dass durch sie zwischen 85% und 95% des durch den Brennstoffkanal 11 zugeführten Brennstoffes austritt und entsprechend nur zwischen 5% und 15% in die Vormischkammer 14 eintritt.

Relativ zur Mündungsöffnung 17 des Brennstoffkanals in die Vormischkammer 14 ist der Querschnitt bzw. die Mündungsöffnung 18 des Kanals für Verbrennungsluft 15 in die Vormischkammer 14 so einstellbar bzw. bemessen, dass sich im Bereich, der für die Stabilisierung des Stützbrenners wichtig ist, in der Vormischkammer 14 ein Brennstoff-Luftgemisch mit einer Luftzahl zwischen 0,3 und 1,0 ergibt. Relativ zur Luftzahl des sich auf Grund des Diffusionsbrennteils der Brenneranordnung einstellenden Brennstoff-Luftgemisches sollte die Luftzahl des sich in der Vormischkammer ausbildenden Gemisches um einen Faktor 5—15 grösser sein.

Die Austrittsöffnungen 16 der Vormischkammer sind derart bemessen, dass die Geschwindigkeit der aus ihnen austretenden Gemischströmung grösser ist als 25% der Geschwindigkeit der aus dem Hauptzuführungskanal 2 in die Brennkammer eintretenden Strömung ist.

Durch den gewählten hohen Brennstoffanteil in dem aus den axialen Austrittsöffnungen 16 der Vormischkammer 14 austretenden Brennstoff-Luftgemisches sowie seiner vergleichsweise hohen Geschwindigkeit ist das Gemisch direkt am Kopf 4 der Brennerlanze 3 nicht brennbar. Es kann sich erst bei seinem Auftreffen auf die Wirbelrückstromzone 10 entzünden, durch die es abgebremst wird. Dadurch bildet sich die vom Haltebrenner gestützte Flamme erst in einer sicheren Entfernung vom Kopf der Brennerlanze aus, wodurch auch Zurückschlagen der Flamme, insbesondere in die Vormischkammer 14 sicher verhindert ist.

Ein Zurückschlagen der vom Stützbrenner gestützten Flamme in den Hauptzuführungskanal 2 kann dadurch verhindert werden, dass zwischen Drallkörper 5 und Brennerlanze 3 ein schmaler Spalt 19 belassen wird, durch den sich auf der Oberfläche der Brennerlanze 3 vom Drallkörper 5 zur Brennkammer 1 hin eine weitgehend drallfreie Strömungsschicht ausbildet. Zur Ausbildung des Spaltes 19 ist der Drallkörper 5 mit einem zylindrischen Leitblech 20 versehen, welche in Strömungsrichtung eine grössere Ausdehnung als der Drallkörper 5 aufweist. Im Spaltbereich ist der Querschnitt der Brennerlanze 3 vorzugsweise etwas reduziert.

Die in den Figuren dargestellte Brennerlanze 3 ist im wesentlichen aus ineinandergeschobenen Rohren gebildet, zwischen denen sich die erwähnten Kanäle für die Verbrennungsluft und den Brennstoff ergeben.

Anstatt das Brennstoff-Luftgemisch für den Haltebrenner in einer Vormischkammer im Kopf 4 der Brennerlanze 3 zu bilden, könnte es natürlich auch ausserhalb der Brennerlanze 3 gebildet werden.

Die Zufuhr für den Brennstoff und die Verbrennungsluft für den Stützbrenner und den Haltebrenner ist vorzugsweise regelbar ausgebildet. Dadurch bestehet die Möglichkeit, diese Brenner beim normalen Betrieb der Brenneranordnung zu drosseln (Teillast) oder abzustellen (Vollast) und sei erst bei Erhöhung der Luftzahl des im Hauptzuführungskanal 2 gebildeten Brennstoff-Luftgemisches in Betrieb zu nehmen.

Diese Inbetriebnahme erfolgt vorzugsweise dann, wenn die Luftzahl des im Hauptzuführungskanals 2 gebildeten Brennstoff-Luftgemisches einen Wert erreicht, der die kritische Grenze für eine reine Vormischverbrennung angibt.

Durch den aus den Austrittsöffnungen 12 des Stützbrenners austretenden Brennstoff wird das aus dem Hauptzuführungskanal 2 in die Brennkammer 1 eintretende Brennstoff-Luftgemisch angefettet. In den mit 13 gekennzeichneten Zonen in der Brennkammer 1 bleibt dadurch über einen weiten Luftzahlbereich des im Hauptzuführungskanal 2 gebildeten Brennstoff-Luftgemisches ein brennbares Gemisches und damit eine Flamme erhalten.

Diese vom Stützbrenner gestützte Flamme wird nun ihrerseits gestützt und stabilisiert durch die Flamme des Haltebrenners. Sie bleibt deshalb auch dann noch in vorteilhafter Weise erhalten, wenn an sich auch ihre Löschgrenze überschritten ist. Dies wird in der Regel im Leerlauf der Brenneranordnung der Fall sein.

Die Massenströme der Luft für den Haltbrenner und die Massenströmung aus dem Hauptzuführungskanal 2 durch den Drallkörper 5 können so gewählt werden, dass ihr Verhältnis kleiner als 1:80 ist. Die vom Haltebrenner verursachte zusätzliche Schadstoffemission mit vernachlässigbar klein.

**Patentansprüche**

1. Brennkammeranordnung für eine Gasturbine, mit einem in eine Brennkammer mündenden Hauptzuführungskanal für ein Brennstof/Luft-Gemisch, mit einem im Hauptzuführungskanal plazierten Drallkörper und mit einer den Drallkörper durchsetzenden mediumführenden und mit einer Vormischkammer versehenen Brennerlanze, wobei die Vormischkammer Austrittsöffnungen in die Brennkammer aufweist, dadurch gekennzeichnet, dass die Brennerlanze (3) mit getrennten, in die Vormischkammer (14) mündenden Kanälen für Brennstoff (11) und Verbrennungsluft (15) durchzogen ist, wobei der Brennstoffkanal (11) vor Einmündung in die Vormischkammer (14) mit Austrittsöffnungen (12) in den Hauptzuführungskanal (2) versehen ist.

2. Brennkammeranordnung nach Anspruch 1, dadurch gekennzeichnet, dass die Austrittsöffnungen (12) in den Hauptzuführungskanal (2) radial und die Austrittsöffnungen (16) in die Brennkammer (1) axial geführt sind.

3. Brennkammeranordnung nach Anspruch 1, dadurch gekennzeichnet, dass die Vormischkammer (14) im Kopf (4) der Brennerlanze (3) angeordnet ist, dass sie als Ringkammer ausgebildet ist und dass ihre Austrittsöffnungen (16) über ihren Umfang verteilt sind.

4. Brennkammeranordnung nach Anspruch 1, dadurch gekennzeichnet, dass die Austrittsöffnungen (12) im Verhältnis zu einer Mündungsöffnung (17) des Brennstoffkanals (11) in die Vormischkammer (14) so bemessen sind, dass durch sie zwischen 85% und 95% des zugeführten Brennstoffs austritt.

5. Brennkammeranordnung nach Anspruch 1, dadurch gekennzeichnet, dass die Querschnitte bzw. die Mündungsöffnungen (17, 18) des Brennstoffkanals (11) und des Verbrennungsluftkanal (15) in die Vormischkammer (14) so bemessen oder einstellbar sind, dass sich in die Vormischkammer (14) ein Brennstoff-Luftgemisch mit einer Luftzahl zwischen 0,3 und 1,0 einstellt.

6. Brennkammeranordnung nach einem der Ansprüche 1 bis 5, dadurch gekennzeichnet, dass die Austrittsöffnungen (16) aus der Vormischkammer (14) so bemessen sind, dass die Geschwindigkeit der aus ihnen austretenden Gemischströmung grösser ist als 25% der Geschwindigkeit der aus dem Hauptzuführungskanal (2) in die Brennkammer (1) eintretenden Strömung.

7. Brennkammeranordnung nach einem der Ansprüche 1 bis 6, dadurch gekennzeichnet, dass zwischen Brennerlanze (3) und Drallkörper (5) ein Spalt (19) angeordnet ist, der einerseits von der Oberfläche der Brennerlanze (3) und andererseits von einem zylindrischen Leitblech (20) begrenzt ist, welche gleichzeitig den inneren Abschluss des Drallkörpers (5) bildet und dass der Querschnitt der Brennerlanze (3) im Spaltbereich reduziert ist.

**Revendications**

1. Agencement de chambre de combustion pour une turbine à gaz, avec un canal d'admission principal pour un mélange air-combustible débouchant dans une chambre de combustion, avec un corps de tourbillonnement placé dans le canal d'admission principal et avec une lance de brûleur transportant un fluide et traversant le corps de tourbillonnement et pourvue d'une chambre de prémélange, où la chambre de prémélange présente des ouvertures de sortie dans la chambre de combustion, caractérisé en ce que la lance de brûleur (3) est parcourue par des canaux séparés à combustible (11) et à air de combustion (15) qui débouchent dans la chambre de prémélange (14), le canal à combustible (11) étant pourvu, avant son embouchure dans la chambre de prémélange (14), d'ouvertures de sortie (13) dans le canal d'admission principal (2).

2. Agencement de chambre de combustion suivant la revendication 1, caractérisé en ce que les ouvertures de sortie (12) dans le canal d'admission principal (2) sont orientées radialement et en ce que les ouvertures de sortie (16) dans la chambre de combustion (1) sont orientées axialement.

3. Agencement de chambre de combustion suivant la revendication 1, caractérisé en ce que la chambre de prémélange (14) est disposée dans la tête (4) de la lance de brûleur (3), en ce qu'elle forme une chambre annulaire et en ce que ses ouvertures de sortie (16) sont réparties suivant sa périphérie.

4. Agencement de chambre de combustion suivant la revendication 1, caractérisé en ce que les ouvertures de sortie (12) sont dimensionnées, par rapport à l'embouchure (17) du canal à combustible (11) dans la chambre de prémélange (14), de telle façon qu'à travers elles passent entre 85% et 95% du combustible débité.

5. Agencement de chambre de combustion suivant la revendication 1, caractérisé en ce que les sections, respectivement les embouchures (17, 18) du canal à combustible (11) et du canal à air de combustion (15) dans la chambre de prémélange (14) sont dimensionnées ou réglables de telle façon qu'il s'établit dans la chambre de prémélange un mélange air-combustible avec un excès d'air compris entre 0,3 et 1,0.

6. Agencement de chambre de combustion suivant l'une ou l'autre des revendications 1 à 5, caractérisé en ce que les ouvertures de sortie (16) de la chambre de prémélange (14) sont dimensionnées de telle façon que la vitesse du courant de mélange qui en sort est supérieure à 25% de la vitesse du courant provenant du canal d'admission principal (2) et pénétrant dans la chambre de combustion (1).

7. Agencement de chambre de combustion suivant l'une ou l'autre des revendications 1 à 6, caractérisé en ce que, entre la lance de bruleur (3) et le corps de tourbillonnement (5), il est prévu une fente (19) qui est limitée d'une part par la surface de la lance de brûleur (3) et d'autre part par une tôle de guidage cylindrique (20) qui forme en même temps le bord du corps de tourbillonnement (5), et en ce que la section de la lance de brûleur (3) est réduite dans la région de la fente.

## Claims

1. Combustion chamber system for a gas turbine, having a main supply channel for a fuel/air mixture debouching into a combustion chamber, having a swirler sited in the main supply channel and having a medium-carrying burner lance which passes through the swirler and is provided with a premix chamber, the premix chamber having exit openings into the combustion chamber, characterized in that the burner lance (3) has, running through it, separate channels for fuel (11) and combustion air (15) debouching into the premix chamber (14), the fuel channel (11) being provided with exit openings (12) into the main supply channel (2) upstream of debouchment into the premix chamber (14).

2. Combustion chamber system according to Claim 1, characterized in that the exit openings (12) into the main supply channel (2) are directed radially and the exit openings (16) into the combustion chamber (1) are directed axially.

3. Combustion chamber system according to Claim 1, characterized in that the premix chamber (14) is disposed in the head (4) of the burner lance (3), in that it is constructed as an annular chamber and in that its exit openings (16) are distributed over its circumference.

4. Combustion chamber system according to Claim 1 characterized in that the exit openings (12) are so dimensioned in relation to a debouchment opening (17) of the fuel channel (11) into the premix chamber (14) that between 85% and 95% of the fuel supplied emerges through it.

5. Combustion chamber system according to Claim 1 characterized in that the cross-sections or the debouchment openings (17, 18) of the fuel channel (11) and the combustion air channel (15) into the premix chamber (14) are so dimensioned or can be so adjusted that a fuel/air mixture with an air/fuel ratio between 0.3 and 1.0 is established in the premix chamber (14).

6. Combustion chamber system according to one of the Claims 1 to 5, characterized in that the exit openings (16) from the premix chamber (14) are so dimensioned that the velocity of the mixture flow emerging from them is greater than 25% of the velocity of the flow entering the combustion chamber (1) from the main supply channel (2).

7. Combustion chamber system according to one of the Claims 1 to 6, characterized in that between burner lance (3) and swirler (5) there is a gap (19) which is bounded, on the one hand, by the surface of the burner lance (3) and, on the other hand, by a cylindrical guide plate (20) which simultaneously forms the inner termination of the swirler (5) and in that the cross-section of the burner lance (3) is reduced in the region of the gap.

EP 0 274 630 B1

FIG. 1

FIG. 2

EP 0 274 630 B1